# FASCICULE DE BREVET EUROPEEN

(11) **EP 1 477 331 B1**
(45) Date de publication et mention de la délivrance du brevet: **02.07.2008**
(21) Numéro de dépôt: 04291212.1
(22) Date de dépôt: 12.05.2004
(51) Int. Cl.: B60B 37/10, B65F 1/14

(54) **Ensemble de roue, notamment pour bac roulant de collecte de déchets**
Radanordnung insbesondere für mit Laufrädern versehenen Müllbehälter
Wheel assembly, in particular for wheeled waste container

(30) Priorité: 15.05.2003 FR 0305823
(43) Date de publication de la demande: 17.11.2004
(73) Titulaire: COMPAGNIE PLASTIC OMNIUM, 69007 Lyon (FR)
(72) Inventeur: Schmidt, Olivier, 15240 Saignes (FR)
(74) Mandataire: Remy, Vincent Noel Paul

(56) Documents cités:
- EP-A- 0 084 488
- AU-A- 5 044 485
- DE-U- 9 317 642
- DE-U- 9 418 141
- GB-A- 1 080 302
- GB-A- 2 151 748
- US-A- 4 674 759

## Description

La présente invention a pour objet un ensemble de roue notamment pour bac roulant de collecte de déchets.

On connaît par le modèle d'utilité allemand DE 94 18 141 un ensemble de roue, comportant une roue pourvue d'un bonhomme à ressort s'engageant dans une gorge annulaire de l'axe de roue.

On connaît également par le brevet européen EP 084 488 de la société déposante, un ensemble de roue comportant un corps d'axe et un embout monté dessus, la roue comportant un bonhomme à ressort s'engageant dans une gorge de l'embout.

Dans ces ensembles connus, du fait de la présence du bonhomme à ressort, la roue comporte un nombre relativement élevé de pièces constitutives, ce qui nécessite un nombre important d'opérations pour l'assemblage de la roue et peut entraîner un coût de revient relativement élevé.

L'invention vise notamment à remédier aux inconvénients précités.

La demande internationale WO 2004/078493 décrit un dispositif de montage d'une structure rotative comportant un moyeu sur un axe, ledit axe étant monté par emboîtement axial dans ledit moyeu.

L'invention a pour objet un ensemble de roue, comportant :
- un axe de roue comprenant au moins une gorge annulaire,
- une roue avec un moyeu définissant un logement dans lequel s'engage une extrémité de l'axe de roue, ce logement comportant au moins une surface de butée,
- un organe de retenue s'engageant au moins partiellement dans ladite gorge annulaire de l'axe, et comportant au moins un relief élastiquement déformable apte à s'appliquer sur la surface de butée du moyeu, lorsque l'axe de roue est engagé dans le logement du moyeu, afin d'immobiliser axialement la roue sur l'axe.

Grâce à l'invention, la roue est maintenue sur l'axe grâce au(x) relief(s) de l'organe de retenue, et il n'est pas nécessaire de prévoir un bonhomme à ressort sur la roue.

Ainsi, celle-ci peut présenter une structure relativement simple, et notamment comporter un nombre réduit de pièces constitutives. La fabrication, en particulier l'assemblage, de la roue s'en trouve simplifiée, ce qui permet de réduire son coût de revient.

Par ailleurs, un fournisseur peut livrer les axes de roue avec les organes de retenues prémontés dans les gorges annulaires de sorte qu'à l'usine d'assemblage des bacs roulants, le montage des roues sur les axes est relativement simple, pouvant être réalisé par encliquetage.

Dans un exemple de mise en oeuvre de l'invention, l'organe de retenue comporte une bague fendue agencée pour s'engager par encliquetage dans la gorge de l'axe de roue.

Cette bague peut présenter une section transversale en U.

De préférence, l'organe de retenue comporte au moins une patte élastiquement déformable apte à s'escamoter radialement.

Dans un exemple de mise en oeuvre de l'invention, cette patte élastiquement déformable se raccorde à la paroi radialement la plus extérieure de la bague.

La surface de butée précitée est avantageusement sensiblement perpendiculaire à l'axe de roue.

Dans un exemple de mise en oeuvre de l'invention, l'organe de retenue comporte un relief de détrompage apte à coopérer, au moins lors du montage de la roue sur l'axe, avec un relief complémentaire réalisé sur la roue.

De préférence, la roue comporte au moins un évidement permettant de recevoir ledit relief élastiquement déformable lorsque l'axe de roue est engagé dans le logement du moyeu.

La roue comportant une bande de roulement, cet évidement peut s'étendre depuis le centre du moyeu jusqu'à cette bande de roulement.

De préférence, l'organe de retenue est réalisé d'un seul tenant en matière plastique.

Comme précisé plus haut, la roue est avantageusement dépourvue de bonhomme à ressort.

L'invention a encore pour objet un bac roulant de collecte de déchets comportant au moins un ensemble de roue tel que défini plus haut.

Pour le cas où il comporte deux roues, le bac peut comprendre deux ensembles tels que précités.

L'invention pourra être mieux comprise à la lecture de la description détaillée qui va suivre, d'un exemple de mise en oeuvre non limitatif, et à l'examen du dessin annexé, sur lequel :
- la figure 1 représente, schématiquement et partiellement, en coupe axiale, un ensemble de roue conforme à l'invention,
- la figure 2 illustre, schématiquement et partiellement, l'axe de roue portant l'organe de retenue de l'ensemble de la figure 1,
- la figure 3 représente, schématiquement et partiellement, en perspective, l'organe de retenue de l'ensemble de la figure 1, et
- la figure 4 est une vue schématique et partielle, en coupe suivant IV-IV, de la figure 1.

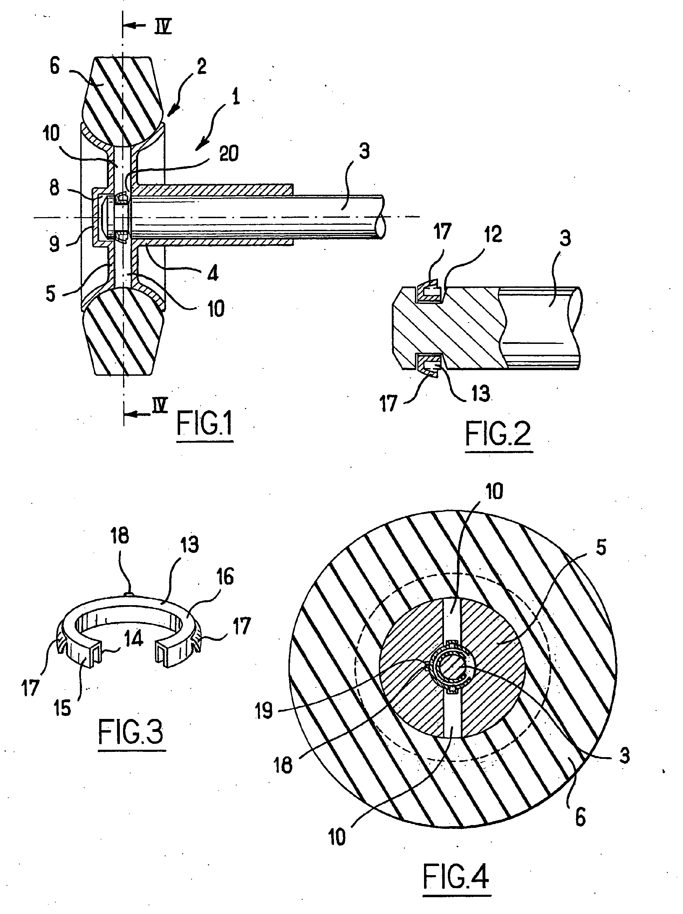

On a représenté sur la figure 1 un ensemble de roue 1 comprenant une roue 2, et un axe de roue 3, destiné à équiper un bac roulant de collecte de déchets.

La roue 2 comporte un moyeu 4 se raccordant par un voile de matière 5 à une bande de roulement 6.

Le moyeu 4 définit un logement 8 fermé à une extrémité axiale par une paroi transversale 9 et ouverte à une extrémité opposée pour recevoir l'axe de roue 3.

Le voile de matière 5 comporte deux évidements 10 s'étendant, suivant un diamètre du voile de matière 5, du centre du moyeu 4 jusqu'à la bande de roulement 6.

L'axe de roue 3 comporte, à proximité de son extrémité axiale, une gorge annulaire 12 permettant de recevoir un organe de retenue 13, comme on peut le voir notamment sur la figure 2.

L'organe de retenue 13 se présente sous la forme d'une bague annulaire fendue ayant une section transversale en U, avec deux parois radialement intérieure 14 et extérieure 15, parallèles et reliées entre elles par une paroi transversale 16.

Comme illustré sur la figure 3, l'organe de retenue 13 comporte deux pattes élastiquement déformables 17, diamétralement opposées, se raccordant à la paroi extérieure 15 et aptes à s'escamoter radialement.

L'organe de retenue 13 comporte en outre un relief de détrompage 18 sous la forme d'un picot apte à s'engager dans une rainure axiale 19 du moyeu 4 lors du montage de la roue 2 sur l'axe 3, permettant un positionnement angulaire prédéterminé de la roue 2 par rapport à l'organe de retenue 13.

Dans l'exemple considéré, l'organe de retenue 13 est réalisé d'un seul tenant par moulage d'une matière plastique.

On va maintenant décrire l'assemblage de la roue 2 sur l'axe 3.

Tout d'abord, l'organe de retenue 13 est introduit dans la gorge 12 par encliquetage grâce à une certaine élasticité radiale de cet organe 13.

Ensuite, on positionne le moyeu 4 par rapport à l'organe de retenue 13 de manière à ce que le relief 18 soit en regard de la rainure axiale 19 du moyeu 4 et que les pattes 17 soient en regard des évidements 10.

En déplaçant la roue 2 sur l'axe 3, les pattes 17 s'escamotent jusqu'à ce que l'extrémité de l'axe de roue 3 vienne en butée dans le fond du logement 8.

Les pattes 17 reprennent alors leur configuration initiale en venant se loger chacune dans un évidement 10 correspondant et sont aptes à venir chacune en butée axiale sur la paroi 20 de l'évidement 10.

Les pattes 17 assurent ainsi l'immobilisation axiale de la roue 2 sur l'axe 3.

Bien entendu, l'invention n'est pas limitée à l'exemple de mise en oeuvre qui vient d'être décrit, ni à l'application prévue pour les bacs roulants de collecte de déchets.

## Revendications

1. Ensemble de roue (1), notamment pour bac roulant de collecte de déchets, comportant :
- un axe de roue (3) comprenant au moins une gorge annulaire (12),
- une roue (2) avec un moyeu (4) définissant un logement (8) dans lequel s'engage une extrémité de l'axe de roue, ce logement comportant au moins une surface de butée (20),
**caractérisé par le fait que** l'ensemble comporte :
- un organe de retenue (13) s'engageant au moins partiellement dans ladite gorge annulaire (12) de l'axe, et comportant au moins un relief élastiquement déformable (17) apte à s'appliquer sur la surface de butée (20) du moyeu, lorsque l'axe de roue est engagé dans le logement du moyeu, afin d'immobiliser axialement la roue sur l'axe,
et **par le fait que** l'organe de retenue (13) comporte au moins un relief de détrompage (18) apte à coopérer, au moins lors du montage de la roue sur l'axe, avec un relief (19) complémentaire réalisé sur la roue.

2. Ensemble selon la revendication 1, **caractérisé par le fait que** l'organe de retenue (13) comporte une bague fendue agencée pour s'engager par encliquetage dans la gorge de l'axe de roue.

3. Ensemble selon la revendication 2, **caractérisé par le fait que** la bague (13) présente une section transversale en U.

4. Ensemble selon l'une des revendications 2 et 3, **caractérisé par le fait que** l'organe de retenue (13) comporte au moins une patte élastiquement déformable (17) apte à s'escamoter radialement.

5. Ensemble selon les revendications 3 et 4, **caractérisé par le fait que** la patte élastiquement déformable (17) se raccorde à la paroi radialement la plus extérieure (15) de la bague.

6. Ensemble selon l'une quelconque des revendications précédentes, **caractérisé par le fait que** la surface de butée (20) est sensiblement perpendiculaire à l'axe de roue.

7. Ensemble selon l'une quelconque des revendications précédentes, **caractérisé par le fait que** la roue (2) comporte au moins un évidement (10) permettant de recevoir ledit relief élastiquement déformable (17) lorsque l'axe de roue est engagé dans le logement du moyeu.

8. Ensemble selon la revendication 7, la roue comportant une bande de roulement (6), **caractérisé par le fait que** ledit évidement (10) s'étend depuis le centre du moyeu jusqu'à la bande de roulement (6).

9. Ensemble selon l'une quelconque des revendications précédentes, **caractérisé par le fait que** l'organe de retenue (13) est réalisé d'un seul tenant en matière plastique.

10. Bac roulant de collecte de déchets comportant au moins un ensemble selon l'une quelconque des revendications précédentes.

## Claims

1. A wheel assembly (1) in particular for a wheeled waste collection bin, the assembly comprising:
· a wheel axle (3) including at least one annular groove (12); and
· a wheel (2) having a hub (4) defining a housing (8) in which one end of the wheel axle engages, said housing including at least one abutment surface (20);
the wheel assembly being **characterized by** the fact that it includes a retaining member (13) engaging at least in part in said annular groove (12) of the axle, and including at least one elastically deformable portion in relief (17) suitable for bearing against the abutment surface (20) of the hub when the wheel axle is engaged in the housing of the hub, so as to prevent the wheel from moving axially along the axle; and
by the fact that the retaining member (13) includes at least one keying portion in relief (18) suitable for co-operating, at least while assembling the wheel on the axle, with a complementary portion in relief (19) formed on the wheel.

2. An assembly according to claim 1, **characterized by** the fact that the retaining member (13) comprises a split ring arranged to engage by snap-fastening in the groove of the wheel axle.

3. An assembly according to claim 2, **characterized by** the fact that the ring (13) presents a U-shaped cross-section.

4. An assembly according to claim 2 or claim 3, **characterized by** the fact that the retaining member (13) includes at least one elastically deformable tab (17) suitable for retracting radially.

5. An assembly according to claims 3 and 4, **characterized by** the fact that the elastically deformable tab (17) is connected to the radially-outermost wall (15) of the ring.

6. An assembly according to any preceding claim, **characterized by** the fact that the abutment surface (20) is substantially perpendicular to the wheel axle.

7. An assembly according to any preceding claim, **characterized by** the fact that the wheel (2) includes at least one recess (10) enabling said elastically deformable portion in relief (17) to be received when the wheel axle is engaged in the housing of the hub.

8. An assembly according to claim 7, the wheel including a tire (6), the assembly being **characterized by** the fact that said recess (10) extends from the center of the hub as far as the tire (6).

9. An assembly according to any preceding claim, **characterized by** the fact that the retaining member (13) is made integrally out of plastics material.

10. A wheeled waste collection bin including at least one assembly according to any preceding claim.

## Patentansprüche

1. Radanordnung (1), insbesondere für einen mit Laufrädern versehenen Müllbehälter, aufweisend:
- eine Radachse (3), aufweisend mindestens eine Ringnut (12),
- ein Rad (2) mit einer Nabe (4), die eine Lagerung (8) definiert, in die ein Ende der Radachse eingreift, wobei diese Lagerung mindestens eine Anschlagfläche (20) aufweist,
**dadurch gekennzeichnet, dass** die Anordnung aufweist:
- ein Halteelement (13), das zumindest teilweise in die Ringnut (12) der Achse eingreift und mindestens ein elastisch verformbares Relief (17) aufweist, das sich an die Anschlagfläche (20) der Nabe anlegen kann, wenn die Radachse in der Lagerung der Nabe im Eingriff ist, um das Rad axial an der Achse festzustellen,
und **dadurch**, dass
- das Haltelement (13) mindestens ein Unverwechselbarkeitsrelief (18) aufweist, das, zumindest bei der Montage des Rades, auf der Achse mit einem auf dem Rad ausgeführten komplementären Relief (19) zusammenwirken kann.

2. Anordnung nach Anspruch 1, **dadurch gekennzeichnet, dass** das Halteelement (13) einen geschlitzten Ring aufweist, der derart angeordnet ist, dass er durch Einrasten in die Nut der Radachse eingreift.

3. Anordnung nach Anspruch 2, **dadurch gekennzeichnet, dass** der Ring (13) einen U-förmigen Querschnitt aufweist.

4. Anordnung nach einem der Ansprüche 2 und 3, **dadurch gekennzeichnet, dass** das Halteelement (13) mindestens eine elastisch verformbare Klaue (17) aufweist, die sich radial einziehen kann.

5. Anordnung nach den Ansprüchen 3 und 4, **dadurch gekennzeichnet, dass** sich die elastisch verformbare Klaue (17) an die radial äußerste Wand (15) des Ringes anschließt.

6. Anordnung nach einem der vorhergehenden Ansprüche, **dadurch gekennzeichnet, dass** die Anschlagfläche (20) im Wesentlichen senkrecht zu der Radachse ist.

7. Anordnung nach einem der vorhergehenden Ansprüche, **dadurch gekennzeichnet, dass** das Rad (2) mindestens eine Aussparung (10) aufweist, die es ermöglicht, das elastisch verformbare Relief (17) aufzunehmen, wenn die Radachse in der Lagerung der Nabe im Eingriff steht.

8. Anordnung nach Anspruch 7, wobei das Rad eine Lauffläche (6) aufweist, **dadurch gekennzeichnet, dass** sich die Aussparung (10) von der Mitte der Nabe bis zur Lauffläche (6) erstreckt.

9. Anordnung nach einem der vorhergehenden Ansprüche, **dadurch gekennzeichnet, dass** das Halteelement (13) aus einem Stück aus Kunststoff hergestellt ist.

10. Mit Laufrädern versehener Müllbehälter, aufweisend mindestens eine Anordnung nach einem der vorhergehenden Ansprüche.
